# EUROPÄISCHE PATENTSCHRIFT

(11) **EP 4 007 708 B1**
(45) Veröffentlichungstag und Bekanntmachung des Hinweises auf die Patenterteilung: **18.09.2024**
(21) Anmeldenummer: 20736944.8
(22) Anmeldetag: 26.06.2020
(51) Int. Cl.: B60K 35/10, B60K 35/22, B60K 35/60, B60K 37/20, B60K 35/00, G09F 9/33, G09F 21/04, G02B 27/01

(54) **ANZEIGEVORRICHTUNG FÜR EIN KRAFTFAHRZEUG**
DISPLAY APPARATUS FOR A MOTOR VEHICLE
APPAREIL D'AFFICHAGE POUR VÉHICULE À MOTEUR

(30) Priorität: 01.08.2019 DE 102019211518
(43) Veröffentlichungstag der Anmeldung: 08.06.2022
(73) Patentinhaber: Audi AG, 85045 Ingolstadt (DE)
(72) Erfinder: MERTENS, Joris, 85051 Ingolstadt (DE); HÉLOT, Jacques, 85051 Ingolstadt (DE); REDEKER, Immo, 85051 Ingolstadt (DE)
(74) Vertreter: Hofstetter, Schurack & Partner
(86) Internationale Anmeldenummer: PCT/EP2020/068012
(87) Internationale Veröffentlichungsnummer: WO 2021/018490

(56) Entgegenhaltungen:
- DE-U1- 202017 105 444
- US-A1- 2009 268 163
- US-A1- 2017 108 988

## Beschreibung

Die Erfindung betrifft eine Anzeigevorrichtung für ein Kraftfahrzeug sowie ein Kraftfahrzeug mit einer derartigen Anzeigevorrichtung.

Eine Anzeigevorrichtung in einem Kraftfahrzeug, die beispielsweise im Bereich eines Armaturenbrettes des Kraftfahrzeugs angeordnet ist, ist üblicherweise mit einer flachen Oberfläche ausgebildet. Alle Informationen, die auf der Anzeigevorrichtung mithilfe einer entsprechenden Anzeige auf einer Anzeigefläche der Anzeigevorrichtung angezeigt werden, werden dann auf einer Anzeigeebene angezeigt, sodass ein Benutzer der Anzeigevorrichtung gegebenenfalls zunächst auf der Anzeige einen gewünschten Menüpunkt oder eine gewünschte Information suchen muss, bevor er diese visuell erfasst.

Die DE 10 2015 011 403 A1 zeigt ein Verfahren zum Anzeigen von Daten auf mindestens zwei räumlichen Ebenen. Hierbei wird die erste Anzeige derart gebogen, dass ein erster Teil der Anzeige aus Betrachtersicht hinter einem zweiten Teil der Anzeige positioniert wird. Auf dem ersten Teil der Anzeige können somit im Vergleich zu einer Anzeige auf dem zweiten Teil der Anzeige vertieft angeordnet erscheinende Anzeigeelemente dargestellt werden.

Die DE 10 2015 009 141 A1 zeigt eine Anzeigeeinrichtung für einen Innenraum eines Kraftfahrzeugs, die mehrere Anzeigefelder und ein Führungssystem aufweist. Durch Bewegungen der einzelnen Anzeigefelder entlang des Führungssystems können insgesamt drei Anzeigefelder hintereinander positioniert und angezeigt werden. Hierdurch wird also eine Anzeige auf drei hintereinander angeordneten Ebenen möglich.

In der DE 10 2004 054 769 B4 ist ein Einbaukombinationsinstrument für ein Kraftfahrzeug gezeigt. Dieses gibt abbildendes Licht ab und ist in einem unmittelbaren Blickfeld des Betrachters angeordnet. Vor einem Display des Einbaukombinationsinstruments wird ein teildurchlässiger Spiegel positioniert, sodass letztendlich Licht einer ersten Anzeigeeinrichtung an dem Spiegel reflektiert wird und für einen Betrachter dem Anzeigebild des Displays ein virtuelles Bild vorgelagert erscheint.

Die US 2017/0108988 A1 zeigt ein Verfahren und eine Vorrichtung zur Erkennung einer Touch-Drag-Geste auf einem gekrümmten Bildschirm. Der Bildschirm wird in mehrere Bereiche unterteilt und es werden mehrere Schwellenwerte festgelegt, wobei jeder Schwellenwert einer Gestenstartrichtung in den mehreren Bereichen entspricht.

Die US 2009/0268163 A1 zeigt ein Anzeigesystem für eine Mittelkonsole eines Fahrzeugs. Das Anzeigesystem umfasst ein lichtdurchlässiges Material und ein Projektionssystem, das dynamische grafische Inhalte auf das Material projiziert, die von einer Eingabe eines Fahrzeuginsassen abhängen.

Die DE 20 2017 105 444 U1 zeigt eine Kraftfahrzeugsteuereinheit zum Lenken eines Kraftfahrzeugs mit zumindest einer Leuchteinheit, die eine Anzeigefläche aufweist, über die Lichtstrahlen austreten.

Es ist die Aufgabe der Erfindung eine Lösung bereitzustellen, mittels derer eine platzsparende Anzeigevorrichtung mit mehreren optischen Anzeigeebenen für ein Kraftfahrzeug bereitgestellt werden kann.

Die Aufgabe wird durch die Gegenstände der unabhängigen Patentansprüche gelöst. Die Ausgestaltungen mit zweckmäßigen und nicht trivialen Weiterbildungen der Erfindung sind in den abhängigen Ansprüchen, der folgenden Beschreibung und den Figuren angegeben.

Der Erfindung liegt die Erkenntnis zugrunde, dass es für einen Benutzer eines Kraftfahrzeugs hilfreich ist, eine Anzeige auf mehreren Anzeigeebenen bereitgestellt zu bekommen, um schnell und komfortabel für ihn interessante Informationen erfassen zu können. Eine derartige herkömmliche Anzeigevorrichtung, die mehrere zum Teil rein virtuelle Anzeigeebenen aufweist, umfasst jedoch mehrere Anzeigeeinrichtungen, das heißt beispielsweise mehrere Displays, die räumlich voneinander getrennt und somit als separate Displays ausgebildet sind. Außerdem sind bei derartigen Anzeigevorrichtungen oftmals transparente Displays hintereinander angeordnet oder halbtransparente Spiegel derart positioniert, dass mithilfe einer Spiegelung eine virtuelle Ebene erzeugt wird. Für einer optimale Ausnutzung eines Bauraums innerhalb des Kraftfahrzeugs, das heißt zum Bereitstellen einer platzsparsamen Anzeigevorrichtung, sowie aus Kostenreduktionsgründen kann es jedoch sinnvoll sein, eine Anzeigevorrichtung vorzusehen, die aus einem einteiligen Anzeigeelement besteht. Die erfindungsgemäße Anzeigevorrichtung für ein Kraftfahrzeug umfasst daher eine einteilig ausgebildete Anzeigefläche.

Die einteilig ausgebildete Anzeigefläche der Anzeigevorrichtung weist eine Hauptanzeigefläche und eine Nebenanzeigefläche auf. Die Hauptanzeigefläche ist von einem Betrachtungspunkt aus zumindest teilweise einsehbar angeordnet, wohingegen die Nebenanzeigefläche von diesem Betrachtungspunkt aus uneinsehbar angeordnet ist. Befindet sich die Anzeigevorrichtung beispielsweise in einer bevorzugten Einbaulage in einem Kraftfahrzeug, beispielsweise in einem Armaturenbrett des Kraftfahrzeugs, ist der Betrachtungspunkt beispielsweise ein Blickausgangspunkt eines auf einem Fahrersitz des Kraftfahrzeugs sitzenden Benutzers des Kraftfahrzeugs. Der Betrachtungspunkt befindet sich daher bevorzugt im Vergleich zu einer Höhe der Anzeigevorrichtung zusätzlich erhöht, sodass eine Achse vom Betrachtungspunkt zur Hauptanzeigefläche der Anzeigevorrichtung in einer Fahrzeuglängsrichtung nach vorne sowie in einer Fahrzeughochrichtung nach unten in Richtung eines Fahrzeugbodens verläuft. Genaugenommen verläuft diese Sichtachse vom Betrachtungspunkt zur Anzeigevorrichtung also nach schräg unten unter Berücksichtigung der Fahrzeuglängsrichtung und der Fahrzeughochrichtung.

Die Hauptanzeigefläche und die Nebenanzeigefläche sind derart zueinander angeordnet, dass sich vom Betrachtungspunkt aus gesehen die Nebenanzeigefläche in der Hauptanzeigefläche spiegelt. Beispielsweise ist die Nebenanzeigefläche oberhalb der Hauptanzeigefläche angeordnet, aber nach unten zur Hauptanzeigefläche hin ausgerichtet. Infolgedessen dieser Spiegelung wird eine von dem Betrachtungspunkt aus einsehbare virtuelle Anzeigeebene als Spiegelbild in der Hauptanzeigefläche und dabei hinter der Anzeigeebene der Hauptanzeigefläche erzeugt. Auf der virtuellen Anzeigeebene wird also ein gespiegelter Anzeigeinhalt der Nebenanzeigefläche angezeigt. Auf der virtuellen Anzeigeebene wird also letztendlich eine Anzeige der Nebenanzeigefläche angezeigt. Die virtuelle Anzeigeebene stellt also die Darstellung dar, die auf der Nebenanzeigefläche angezeigt wird und die in der Hauptanzeigefläche gespiegelt für den Betrachter von dem Betrachtungspunkt aus sichtbar ist. Die Anzeigeebene der Hauptanzeigefläche und die virtuelle Anzeigefläche (Spiegelbild) der Nebenanzeigefläche unterscheiden sich insbesondere dadurch, dass man von Betrachtungspunkt aus mit dem Auge auf unterschiedliche Entfernungen fokussieren muss, um die jeweilige Anzeigefläche scharf abzubilden oder zu sehen. Die Entfernung der virtuellen Anzeigeebene ist dabei größer als diejenige der Anzeigeebene der Hauptanzeigefläche. Daher wird vom Betrachtungspunkt aus gesehen die virtuelle Anzeigefläche optisch hinter der Anzeigeebene der Hauptanzeigefläche wahrgenommen.

Diese Konstellation von Anzeigeebenen kann dazu genutzt werden, dass beispielsweise auf der Nebenanzeigefläche zusätzlich Informationen zum Beispiel betreffend ein Navigationssystem des Kraftfahrzeugs angezeigt werden, wie zum Beispiel ein in Fahrtrichtung weisender Pfeil. Auf der Hauptanzeigefläche selbst wird beispielsweise der Rand einer Straße dargestellt, wobei in der virtuellen Anzeigeebene hinter dieser auf der Hauptanzeigefläche angezeigten Straße der auf der Nebenanzeigefläche angezeigte und in der Hauptanzeigefläche gespiegelter Richtungspfeil angezeigt wird.

Die angezeigte Straße und der Richtungspfeil sind in zwei verschiedenen Anzeigeebenen angeordnet und sind somit perspektiven betrachtet versetzt zueinander angeordnet. Alternativ dazu kann beispielsweise auf der Hauptanzeigefläche ein Albumcoverbild angezeigt werden, wobei eine Multimediaeinrichtung des Kraftfahrzeugs zu dem aktuellen Zeitpunkt ein Lied aus dem Musikalbum abspielt, dessen Albumcoverbild angezeigt wird. Mithilfe der gespiegelten Anzeige der Nebenanzeigefläche kann auf der virtuell einsehbaren Anzeigeebene beispielsweise eines oder mehrere weitere Albumcoverbilder von Musikalben desselben Künstlers angezeigt werden oder aber Albumcoverbilder von Musikalben alternativer Künstler, die zum Beispiel derselben Musikrichtung zugeordnet werden können, wie der Künstler des aktuell abgespielten Liedes. Die mithilfe der auf der virtuellen Anzeigeebene angezeigten Albumcoverbilder wird verdeutlicht, dass die entsprechende Musik dieser Musikalben ebenfalls, zum Beispiel auf Wunsch des Benutzers oder im Anschluss an das Abspielen der Musik des auf der Hauptanzeigefläche angezeigten Musikalbums, zur Aktivierung zur Verfügung steht. Es ist also mithilfe der Anzeigevorrichtung ein intuitiv erfassbares Bedienkonzept möglich, bei dem auf zwei verschiedenen Anzeigeebenen Informationen für den Benutzer des Kraftfahrzeugs bereitgestellt werden können. Hierbei wird jedoch nur ein Bauteil benötigt, da die Anzeigevorrichtung eine einteilig ausgebildete Anzeigefläche aufweist. Die Anzeigevorrichtung ist dadurch platzsparend ausgestaltet und kann kompakt in das Kraftfahrzeug eingebaut werden. Ein mit der Anzeigevorrichtung realisierbares Anzeigekonzept kann außerdem ergonomischer und intuitiver bedienbar sein, als ein Bedienkonzept mit nur einer Ebene, da zusätzliche Informationen mithilfe der virtuellen Anzeigeebene angezeigt werden können.

Alternativ oder zusätzlich zu den beschriebenen Anordnungen der Hauptanzeigefläche und der Nebenanzeigefläche zueinander kann beispielsweise die Nebenanzeigefläche oberhalb und/oder seitlich der Hauptanzeigefläche angeordnet sein.

Erfindungsgemäß ist es vorgesehen, dass die Anzeigefläche gebogen ausgebildet ist. Die Hauptanzeigefläche und die Nebenanzeigefläche sind daher in einem Winkel größer als null Grad und kleiner als 90 Grad zueinander angeordnet. Insgesamt ist die Anzeigevorrichtung somit derart ausgebildet, dass sich die Hauptanzeigefläche und die Nebenanzeigefläche einander bereichsweise gegenüberliegen, sodass die Spiegelung der Nebenanzeigefläche in der Hauptanzeigefläche möglich ist. Hierdurch kann die Anzeigevorrichtung beispielsweise in einer Vertiefung im Kraftfahrzeug angeordnet werden, wobei der Bereich der Nebenanzeigefläche an einer in Fahrzeughochrichtung oberen Seite dieser Aussparung angeordnet ist, wohingegen die Hauptanzeigefläche an einer unteren Seite der Aussparung angeordnet ist, die vom Betrachtungspunkt aus einsehbar ist und dem Bereich der Nebenanzeigefläche in etwa gegenüberliegt. Alternativ dazu kann das die Anzeigevorrichtung freistehend ausgebildet sein. Der Winkel zwischen Hauptanzeigefläche und Nebenanzeigefläche ist in dem angegebenen Winkelbereich variabel, muss jedoch derart gewählt werden, dass die Nebenanzeigefläche noch in der Hauptanzeigefläche gespiegelt werden kann, das heißt der Winkel muss kleiner als 90 Grad betragen. Hierdurch werden zahlreiche und verschiedenartig designte Anordnungsmöglichkeiten der einzelnen Anzeigeflächen der einteilig ausgebildeten Anzeigefläche zueinander möglich und somit eine vielseitige Einsetzbarkeit der Anzeigevorrichtung.

Außerdem sieht es die Erfindung vor, dass eine Biegekante der gebogen ausgebildeten Anzeigefläche zwischen der Hauptanzeigefläche und der Nebenanzeigefläche angeordnet ist. Die beiden Teilanzeigeflächen der Anzeigefläche, das heißt die Hauptanzeigefläche und die Nebenanzeigefläche, sind somit nicht im Bereich der Biegekante der gebogenen Anzeigefläche angeordnet, sondern beispielsweise angrenzend an diese Biegekante. Hierdurch werden beispielsweise optische Störeffekte durch Spiegeleffekte oder eine Anzeige auf der gekrümmten Biegekante verhindert, sodass die Anzeige auf der Anzeigefläche, die von dem Betrachtungspunkt aus einsehbar ist, von dem Benutzer der Anzeigevorrichtung besonders komfortabel und ohne optische Störeffekte wahrgenommen werden kann.

Zu der Erfindung gehören auch Ausgestaltungsformen, durch die sich zusätzliche Vorteile ergeben.

Eine vorteilhafte Ausgestaltungsform der Erfindung sieht vor, dass die Anzeigevorrichtung ein Trägerelement sowie mehrere ansteuerbare Leuchtelemente, die auf dem Trägerelement angeordnet sind, umfasst. Die auf dem Trägerelement angeordneten Leuchtelemente bilden die Anzeigefläche. Die Anzeigevorrichtung ist also nicht als durchgängiger Bildschirm, das heißt beispielsweise als starres Display ausgebildet, sondern kann aus einzelnen beispielsweise individuell ansteuerbaren Leuchtelementen bestehen. Dies hat den Vorteil, dass eine beliebig geformte Anzeigefläche möglich ist, auf der dennoch die Hauptanzeigefläche und die Nebenanzeigefläche anordenbar sind, da die Leuchtelemente auf verschiedenartig geformten Trägerelementen anordenbar sind. Hierdurch wird letztendlich die Formgebung der Anzeigefläche und somit der Anzeigevorrichtung vielseitig und an eine gewünschte Umgebung am Kraftfahrzeug anpassbar gestaltbar. Dies verstärkt die Möglichkeit, eine platzsparende Anzeigevorrichtung für das Kraftfahrzeug zu realisieren.

In einer zusätzlichen Ausgestaltungsform ist es vorgesehen, dass die mehreren Leuchtelemente als jeweilige organische Leuchtdioden und/oder Mikroleuchtdioden ausgebildet sind. Die einzelnen Leuchtelemente der Anzeigefläche können somit beispielsweise als sogenannte OLEDs (Organic Light Emitting Diode) oder als Mikro-LEDs (LED für Light Emitting Diode) ausgebildet sein. Diese Wahl der Leuchtdiode hat den Vorteil, dass damit beliebig gebogene und geformte Anzeigeflächen bestückt werden können, da die einzelnen Leuchtelemente zum Beispiel im Falle der Mikro-LEDs einen Durchmesser von kleiner als 100 Mikrometern haben. Eine individuelle Ansteuerbarkeit der einzelnen jeweiligen OLEDs beziehungsweise Mikro-LEDs ermöglichen zudem die einfach realisierbare Unterteilung der einteilig ausgebildeten Anzeigefläche in die Hauptanzeigefläche und die Nebenanzeigefläche.

Alternativ oder zusätzlich dazu kann die Anzeigefläche als handelsübliches Display, beispielsweise aus Glas oder als einlaminiertes Display, ausgebildet sein. Es kann außerdem vorgesehen sein, dass beispielsweise die Hauptanzeigefläche als herkömmliches Display, das heißt als herkömmlicher Bildschirm ausgebildet ist, wohingegen die Nebenanzeigefläche aus einzeln ansteuerbaren OLEDs oder Mikro-LEDs gebildet ist, oder umgekehrt. Hierdurch wird eine Herstellung der Anzeigevorrichtung günstiger möglich, sodass eine besonders kostengünstige Anzeigevorrichtung hergestellt werden kann. Dennoch ist das Anliegen der Erfindungsidee, dass die Anzeigefläche an sich einteilig ausgebildet ist, das heißt, dass beispielsweise zwischen der herkömmlich ausgebildeten Hauptanzeigefläche und der mittels OLEDs ausgebildeten Nebenanzeigefläche keine markante Grenze besteht, sodass Hauptanzeigefläche und Nebenanzeigefläche unmittelbar ineinander übergehen.

Alternativ oder zusätzlich dazu kann die Anzeigefläche in einer nicht beanspruchten Ausgestaltungsform zweiteilig sein, wobei jedes der beiden Teile, die Hauptanzeigefläche und die Nebenanzeigefläche, auf einer Displaytechnologie basiert, die sich von der Displaytechnologie des anderen Teils unterscheidet. Zum Beispiel kann die Hauptanzeigefläche aus OLEDs und die Nebenanzeigefläche aus Mikro-LEDs hergestellt sein. Hierdurch kann eine Kostenoptimierung erfolgen, da beispielsweise für die Nebenanzeigefläche eine kostengünstigerer Displaytechnologie gewählt werden kann als für die Hauptanzeigefläche.

Eine besonders vorteilhafte Ausgestaltungsform der Erfindung sieht vor, dass die Hauptanzeigefläche als berührungssensitiver Bildschirm ausgebildet ist. Die Anzeigevorrichtung ist somit nicht nur eine reine Anzeigevorrichtung, sondern kann zudem eine Bedieneinrichtung sein. Hierfür kann beispielsweise mithilfe einer Berührung mit einer Hand des Benutzers ein auf der Hauptanzeigefläche angezeigtes Auswahlelement ausgewählt werden, sodass beispielsweise mithilfe der Anzeigevorrichtung ein Navigationssystem oder ein Multimediasystem des Kraftfahrzeugs nicht nur Informationen anzeigen, sondern zudem vom Benutzer bedient werden kann. Es kann beispielsweise vorgesehen sein, dass die auf der Hauptanzeigefläche angezeigten Anzeigeelemente mithilfe des berührungssensitiven Bildschirms bedienbar sind, jedoch die auf der virtuellen Anzeigeebene mithilfe der Nebenanzeigefläche angezeigten Anzeigeelemente lediglich informierenden Charakter haben und beispielsweise nicht aktiv vom Benutzer durch Berührung des berührungssensitiven Bildschirms ausgewählt und aktiviert werden können. Die Hauptanzeigefläche ist also als Touchscreen oder Touchpad gestaltet. Hierdurch wird ein besonders intuitives Bedienkonzept für das Kraftfahrzeug realisierbar. Außerdem können hierdurch zusätzliche Betätigungselemente, wie beispielsweise ein Dreh-Drück-Schalter oder eine Kipptaste, die zusätzlich im Kraftfahrzeug vorgesehen sein müssten, eingespart werden, wodurch die Anzeigevorrichtung platzsparend und außerdem kostensparsam in das Kraftfahrzeug eingebaut werden kann.

Alternativ oder zusätzlich dazu kann eine Berührungsgeste der berührungssensitiven Hauptanzeigefläche vorgesehen sein, mithilfe derer zu einer Bedienebene der virtuellen Anzeigeebene und von dieser wieder zurück gewechselt werden kann. Die Berührungsgeste kann zum Beispiel eine Drehung um 90 Grad einer Fingerkuppe auf dem berührungssensitiven Bildschirm der Hauptanzeigefläche sein. Hierdurch wird ein vielseitiges und umfangreichen Bedienkonzept für die Anzeigevorrichtung möglich, dass dennoch intuitiv für den Benutzer bedienbar ist.

Eine weitere vorteilhafte Ausgestaltungsform der Erfindung sieht vor, dass die Hauptanzeigefläche als transparenter Bildschirm ausgebildet ist, der zum Beispiel aus transparenten OLEDs hergestellt ist. Die Hauptanzeigefläche weist also einen Transmissionsgrad von größer als null bis zu 1 auf. Alternativ oder zusätzlich dazu kann die Nebenanzeigefläche als transparenter Bildschirm ausgebildet sein. Der transparente Bildschirm kann unauffällig in eine Umgebung integriert sein. Zudem ermöglicht er zahlreiche zusätzliche Anordnungsmöglichkeiten, wie zum Beispiel in einer Windschutzscheibe eines Kraftfahrzeugs.

Das erfindungsgemäße Kraftfahrzeug weist eine Anzeigevorrichtung auf, wie sie oben beschrieben wurde. Die im Zusammenhang mit der erfindungsgemäßen Anzeigevorrichtung vorgestellten und bevorzugten Ausgestaltungen und deren Vorteile gelten entsprechend, soweit anwendbar, für das erfindungsgemäße Kraftfahrzeug.

In einer vorteilhaften Ausgestaltungsform des erfindungsgemäßen Kraftfahrzeug ist es vorgesehen, dass die Anzeigevorrichtung in einem Armaturenbrett des Kraftfahrzeugs angeordnet ist. Die Anzeigevorrichtung kann also beispielsweise direkt hinter einem Lenkrad des Kraftfahrzeugs positioniert sein, wobei der auf dem Fahrersitz sitzende Benutzer lediglich die Hauptanzeigefläche direkt einsehen kann, jedoch die Nebenanzeigefläche nicht. Darüber hinaus kann sich die Anzeigevorrichtung nicht nur im unmittelbaren Bereich des Armaturenbretts befinden, sondern beispielsweise auf einer ganzen vorderen Wand des Kraftfahrzeugs zwischen zwei A-Säulen des Kraftfahrzeugs, das heißt entlang der ganzen Windschutzscheibe in Armaturenbretthöhe, angeordnet sein. Die Nebenanzeigefläche ist hierbei für Personen, die im Kraftfahrzeug sitzen, stets nicht einsehbar angeordnet, das heißt beispielsweise an einem oberen Randbereich einer Aussparung im Kraftfahrzeug, in der die Anzeigevorrichtung angeordnet ist. Die Hauptanzeigefläche ist nicht nur für den Fahrer auf dem Fahrersitz, sondern auch beispielsweise für einen Beifahrer auf einem Beifahrersitzplatz im Kraftfahrzeug aus einsehbar. Hierdurch wird eine auf den ersten Blick unauffällige, platzsparsame und sich an die Form des Frontbereichs des Kraftfahrzeugs anpassbare Anzeigevorrichtung für das Kraftfahrzeug bereitgestellt.

Zu der Erfindung gehört auch eine Steuervorrichtung für ein Kraftfahrzeug. Die Steuervorrichtung weist eine Prozessoreinrichtung auf, die dazu eingerichtet ist, die erfindungsgemäße Anzeigevorrichtung anzusteuern. Die Prozessoreinrichtung kann hierzu zumindest einen Mikroprozessor oder zumindest einen Microcontroler oder zumindest ein FPGA (Field Programmable Gate Array) und/oder zumindest ein DSP (Digital Signal Processor) aufweisen. Des Weiteren kann die Prozessoreinrichtung einen Programmcode aufweisen, der dazu eingerichtet ist, bei Ausführung durch die Prozessoreinrichtung die erfindungsgemäße Anzeigevorrichtung anzusteuern. Der Programmcode kann in einem Datenspeicher der Prozessoreinrichtung gespeichert sein.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausgestaltungsformen.

Im Folgenden sind Ausführungsbeispiele der Erfindung beschrieben. Hierzu zeigt:
- Fig. 1: eine schematische Darstellung eines Kraftfahrzeugs mit einer Anzeigevorrichtung;
- Fig. 2: eine Querschnittansicht einer Anzeigevorrichtung für ein Kraftfahrzeug;
- Fig. 3: eine Perspektivansicht einer Anzeigevorrichtung für ein Kraftfahrzeug;
- Fig. 4a: eine Querschnittsansicht einer Anzeigevorrichtung für ein Kraftfahrzeug mit einer Shutterfolie;
- Fig. 4b: eine Querschnittsansicht einer stark gebogenen Anzeigevorrichtung für ein Kraftfahrzeug; und
- Fig. 5: eine schematische Darstellung einer Anzeigevorrichtung für ein Kraftfahrzeug mit zwei nebeneinander angeordneten Anzeigeflächen;

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

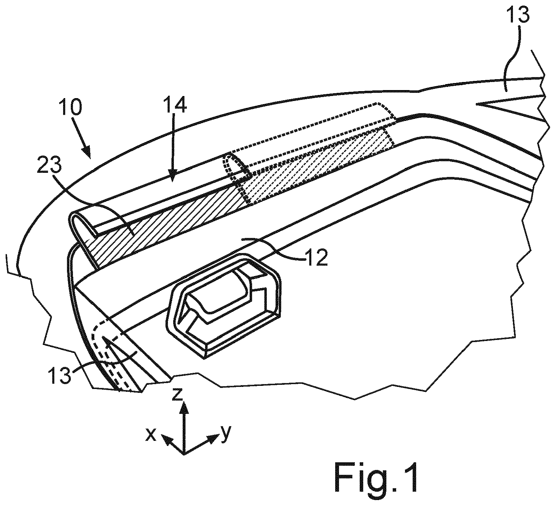

In Fig. 1 ist ein Kraftfahrzeug 10 skizziert. In diesem Kraftfahrzeug 10 ist im Bereich eines Armaturenbretts 12 des Kraftfahrzeugs 10 eine Anzeigevorrichtung 14 angeordnet. Diese Anzeigevorrichtung 14 kann sich nur im Bereich des Armaturenbretts 12 selbst befinden. Sie kann jedoch alternativ oder zusätzlich dazu auch derart ausgeformt sein, dass sie sich über einen gesamten Frontbereich des Kraftfahrzeugs 10 erstreckt, sodass sie letztendlich zwischen zwei A-Säulen 13 des Kraftfahrzeugs 10 angeordnet ist. Diese vergrößerte Ausgestaltung der Anzeigevorrichtung 14 verglichen mit der Ausgestaltung, in der die Anzeigevorrichtung 14 lediglich im Bereich des Armaturenbretts 12 angeordnet ist, ist mit gestrichelten Linien in der Fig. 1 dargestellt. Es ist zudem eine gestrichelte Fläche 23 in Fig. 1 skizziert.

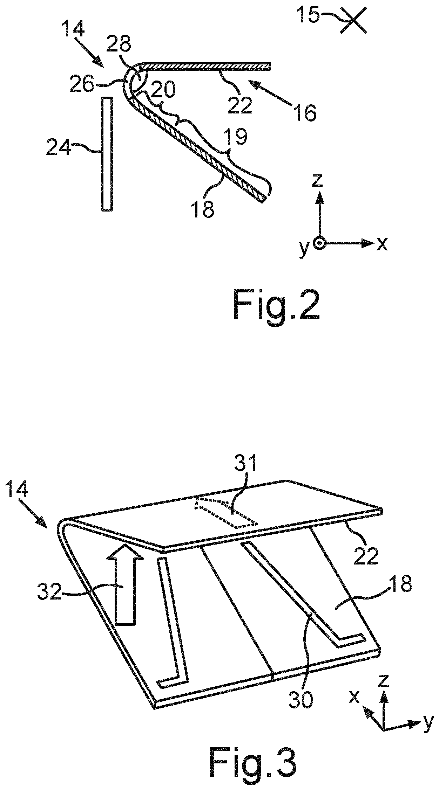

In Fig. 2 ist die Anzeigevorrichtung 14 in einer geschnittenen Darstellung skizziert. Die Anzeigevorrichtung 14 wird von einem Betrachter von einem Betrachtungspunkt 15 aus betrachtet. Bei diesem Betrachter handelt es sich beispielsweise um einen Benutzer des Kraftfahrzeugs 10, der auf einem Fahrersitz des Kraftfahrzeugs 10 sitzt und auf die Anzeigevorrichtung 14 blickt. Die Anzeigevorrichtung 14 umfasst eine einteilig ausgebildete Anzeigefläche 16. Diese weist zum einen eine Hauptanzeigefläche 18 auf, die von dem Betrachtungspunkt 15 aus zumindest teilweise einsehbar angeordnet ist. Genaugenommen weist die Hauptanzeigefläche 18 einen vom Betrachtungspunkt 15 aus einsehbaren Teilbereich 19 sowie einen vom Betrachtungspunkt 15 aus uneinsehbaren Teilbereich 20 auf. Der einsehbare Teilbereich 19 ist in Fig. 1 als die straffierte Fläche 23 skizziert. Außerdem weist die Anzeigefläche 16, wie sie in Fig. 2 skizziert ist, eine Nebenanzeigefläche 22 auf, die von dem Betrachtungspunkt 15 aus uneinsehbar angeordnet ist. Die Hauptanzeigefläche 18 und die Nebenanzeigefläche 22 werden hierbei durch eine Biegekante 26 voneinander getrennt. Die Anzeigefläche 16 ist also gebogen ausgebildet, wobei die Hauptanzeigefläche 18 und die Nebenanzeigefläche 22 in einem Winkel 28 größer als null Grad und kleiner als 90 Grad zueinander angeordnet sind. Aufgrund dieser Anordnung der Anzeigefläche 16 sind die Hauptanzeigefläche 18 und die Nebenanzeigefläche 22 derart zueinander angeordnet, dass sich die Nebenanzeigefläche 22 in der Hauptanzeigefläche 18 spiegelt. Infolgedessen wird eine von dem Betrachtungspunkt 15 aus einsehbare virtuelle Anzeigeebene 24 hinter der Hauptanzeigefläche 18 erzeugt.

In Fig. 3 ist eine Perspektivansicht der Anzeigevorrichtung 14 skizziert. Hierbei wird auf der Hauptanzeigefläche 18 ein Straßenverlauf 30 angezeigt. Auf der Nebenanzeigefläche 22 wird ein angezeigter Pfeil 31 dargestellt. Diese wird nun an der Hauptanzeigefläche 18 gespiegelt, sodass auf der virtuellen Anzeigeebene 24 ein virtueller Pfeil 32 zu sehen ist. Auf der virtuellen Anzeigeebene 24 wird also eine Anzeige angezeigt, die auf der Nebenanzeigefläche 22 angezeigt wird, jedoch ist diese gespiegelt auf der virtuellen Anzeigeebene 24 vom Betrachtungspunkt 15 aus sichtbar.

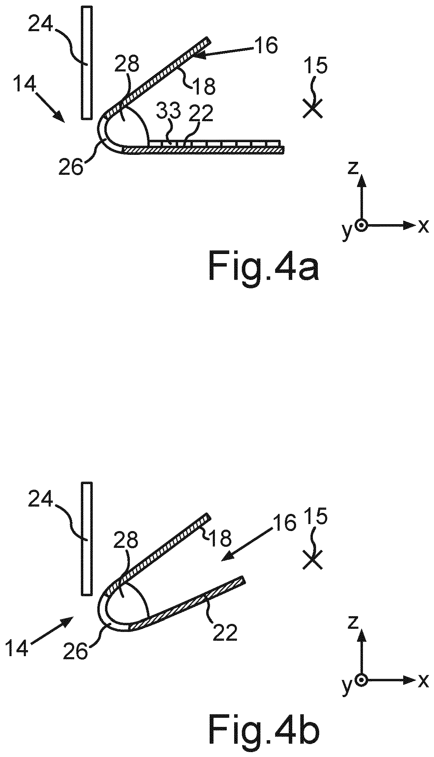

In Fig. 4a und Fig. 4b ist jeweils eine weitere Anzeigevorrichtung 14 in einer geschnittenen Darstellung skizziert. Hierbei ist die Anordnung der Hauptanzeigefläche 18 und der Nebenanzeigefläche 22 im Vergleich zu der oben beschriebenen Anordnung vertauscht, das heißt die Nebenanzeigefläche 22 ist in Fahrzeughochrichtung, das heißt in z-Richtung, jeweils unterhalb der Hauptanzeigefläche 18 angeordnet. In Fig. 4a wird mithilfe einer Blickschutzfolie 33 auf der Nebenanzeigefläche 22 erreicht, dass vom Betrachtungspunkt 15 aus, die Anzeige auf der Nebenanzeigefläche 22 nicht zu sehen ist. Bei der Blickschutzfolie 33 handelt es sich um eine oftmals als Shutter-Folie oder Privacy-Folie bezeichnete Folie, die als Filter wirkt. Die Blickschutzfolie 33, die mikroskopische Lamellen aufweisen kann, bewirkt daher, dass außerhalb eines Blickwinkels von typischerweise 60 Grad eine Sicht auf die auf der Nebenanzeigefläche 22 angezeigte Anzeige blockiert ist. In Fig. 4b ist der Winkel 28 zwischen 0 Grad und kleiner als 45 Grad, sodass bei dem skizzierten Betrachtungspunkt 15 keine Blickschutzfolie 33 auf der Nebenanzeigefläche 22 benötigt wird, um zu erreichen, dass die dort angezeigte Anzeige nicht unmittelbar vom Betrachtungspunkt 15 aus einsehbar ist.

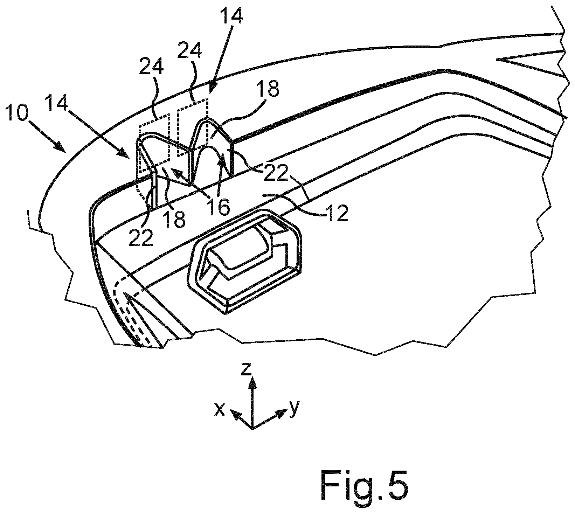

In Fig. 5 sind zwei nebeneinander angeordnete Anzeigevorrichtungen 14 im Kraftfahrzeug 10 skizziert, die im Bereich einer Aussparung im Armaturenbrett 12 angeordnet sind. Hierbei ist bei jeder Anzeigevorrichtung 14 die Nebenanzeigefläche 22 seitlich in Fahrzeugquerrichtung, also in y-Richtung, neben der Hauptanzeigefläche 18 angeordnet. Hierbei ist jeweils vom Betrachtungspunkt 15 des Fahrers des Kraftfahrzeugs 10 aus betrachtet nur die Hauptanzeigefläche 18 zumindest bereichsweise einsehbar, wohingegen der Fahrer die Nebenanzeigefläche 22 nicht direkt einsehen kann. Alternativ dazu können die in Fig. 5 skizzierten Anzeigevorrichtungen 14 freistehend im Kraftfahrzeug 10 angeordnet sein.

Die Anzeigevorrichtung 14 kann außerdem ein Trägerelement sowie mehrere ansteuerbare Leuchtelemente, die auf dem Trägerelement angeordnet sind, umfassen. Die auf dem Trägerelement angeordneten Leuchtelemente bilden dann die Anzeigefläche 16, das heißt letztendlich die Hauptanzeigefläche 18 und die Nebenanzeigefläche 22. Die mehreren Leuchtelemente können hierbei jeweils als OLEDs, das heißt als organische Leuchtdioden, oder als Mikro-LEDs, das heißt als Mikroleuchtdioden, ausgebildet sein. Die Hauptanzeigefläche 18 kann außerdem als berührungssensitiver Bildschirm ausgebildet sein. Ist dies der Fall ist nicht nur eine reine Anzeige von Informationen mithilfe der Anzeigevorrichtung 14 möglich, sondern zudem ein Bedienkonzept für das Kraftfahrzeug 10 bereitstellbar.

Insgesamt zeigt die Erfindung ein gebogenes OLED-Display, das heißt eine gebogene Anzeigevorrichtung 14 aus einzeln ansteuerbaren Leuchtelementen, wobei die Anzeigevorrichtung in sich reflektiert. Hierbei ist eine gebogene Anzeigefläche 16 so geformt, dass es zwei Bereiche gibt. Der erste Bereich liegt so, dass ein Benutzer des Kraftfahrzeugs 10 diesen Bereich nicht sehen kann, das heißt der erste Bereich ist in Form der Nebenanzeigefläche 22 gegeben. Der zweite Bereich liegt schräg dazu, sodass eine Anzeige auf diesem Bereich für den Benutzer sichtbar ist, das heißt es wird die Hauptanzeigefläche 18 bereitgestellt, die vom Betrachtungspunkt 15 aus zumindest teilweise einsehbar ist. Dieser zweite Bereich, das heißt die Hauptanzeigefläche 18, ist spiegelnd ausgebildet und spiegelt die Anzeige des ersten Bereichs, das heißt der Nebenanzeigefläche 22. Hierdurch wird die virtuelle Anzeigeebene 24 hinter der Hauptanzeigefläche 18 gebildet. Eine derartige Anzeige auf zwei Anzeigeebenen, das heißt auf der Hauptanzeigefläche 18 sowie der virtuellen Anzeigeebene 24 dahinter, ist besonders faszinierend und außerdem ergonomisch vorteilhaft bedienbar, da insbesondere mithilfe der Ausbildung der Hauptanzeigefläche 18 als berührungssensitiver Bildschirm ein besonders benutzerfreundliches Bedienkonzept umsetzbar ist.

Hierbei ist zu beachten, dass die Hauptanzeigefläche 18 vorteilhafte reflektierende Eigenschaften aufweist, sodass die Anzeige der Nebenanzeigefläche 22 vom Betrachtungspunkt 15 aus gut sichtbar in der Hauptanzeigefläche 18 gespiegelt wird. Hierdurch wird die virtuelle Anzeigeebene 24 gut auf der Hauptanzeigefläche 18 sichtbar. Diese vorteilhafte spiegelnde Eigenschaft der Hauptanzeigefläche 18 ist beispielsweise durch eine entsprechende Beschichtung der Hauptanzeigefläche 18 möglich. Außerdem sollte eine Intensität der Anzeige auf der Nebenanzeigefläche 22 derart groß gewählt werden, dass es zu einer unter Berücksichtigung beispielsweise der Umgebungsbeleuchtung im Kraftfahrzeug 10 ausreichend deutlich sichtbaren virtuellen Anzeige auf der virtuellen Anzeigeebene 24 kommen kann.

## Patentansprüche

1. Anzeigevorrichtung (14) für ein Kraftfahrzeug (10), umfassend eine Anzeigefläche (16) mit:
- einer Hauptanzeigefläche (18), die von einem vorbestimmten Betrachtungspunkt (15) aus zumindest teilweise einsehbar angeordnet ist; und
- einer Nebenanzeigefläche (22), die von dem Betrachtungspunkt (15) aus uneinsehbar angeordnet ist;
wobei die Hauptanzeigefläche (18) und die Nebenanzeigefläche (22) derart zueinander angeordnet sind, dass sich von dem Betrachtungspunkt (15) aus gesehen die Nebenanzeigefläche (22) in der Hauptanzeigefläche (18) spiegelt, **dadurch gekennzeichnet, dass** infolgedessen eine von dem Betrachtungspunkt (15) aus einsehbare virtuelle Anzeigeebene (24), auf der ein gespiegelter Anzeigeinhalt der Nebenanzeigefläche (22) angezeigt ist, optisch hinter der Hauptanzeigefläche (18) erscheint und die Anzeigefläche (16) einteilig ausgebildet ist, wobei die Anzeigefläche (16) gebogen ausgebildet ist und die Hauptanzeigefläche (18) und die Nebenanzeigefläche (22) in einem Winkel größer als null Grad und kleiner als 90 Grad zueinander angeordnet sind, wobei eine Biegekante (26) der gebogen ausgebildeten Anzeigefläche (16) zwischen der Hauptanzeigefläche (18) und der Nebenanzeigefläche (22) angeordnet ist.

2. Anzeigevorrichtung (14) nach dem vorhergehenden Anspruch, wobei die Anzeigevorrichtung (14) ein Trägerelement sowie mehrere ansteuerbare Leuchtelemente, die auf dem Trägerelement angeordnet sind, umfasst, wobei die auf dem Trägerelement angeordneten Leuchtelemente die Anzeigefläche (16) bilden.

3. Anzeigevorrichtung (14) nach dem vorhergehenden Anspruch, wobei die mehreren Leuchtelemente als jeweilige organische Leuchtdioden und/oder Mikroleuchtdioden ausgebildet sind.

4. Anzeigevorrichtung (14) nach einem der vorhergehenden Ansprüche, wobei die Hauptanzeigefläche (18) als berührungssensitiver Bildschirm ausgebildet ist.

5. Anzeigevorrichtung (14) nach einem der vorhergehenden Ansprüche, wobei die Hauptanzeigefläche (18) als transparenter Bildschirm ausgebildet ist.

6. Kraftfahrzeug (10) mit einer Anzeigevorrichtung (14) nach einem der vorhergehenden Ansprüche.

7. Kraftfahrzeug (10) nach dem vorhergehenden Anspruch, wobei die Anzeigevorrichtung (14) in einem Armaturenbrett (12) des Kraftfahrzeugs (10) angeordnet ist.

## Claims

1. A display device (14) for a motor vehicle (10), including a display surface (16) comprising:
- a principal display surface (18), which is arranged at least partially visible from a predetermined viewpoint (15); and
- a secondary display surface (22), which is arranged invisible from the viewpoint (15);
wherein the principal display surface (18) and the secondary display surface (22) are arranged to each other such that the secondary display surface (22) is reflected in the principal display surface (18) viewed from the viewpoint (15), **characterized in that**, as a result, a virtual display plane (24) visible from the viewpoint (15), on which a reflected display content of the secondary display surface (22) is displayed, optically appears behind the principal display surface (18), and the display surface (16) is integrally formed, wherein the display surface (16) is formed bent and the principal display surface (18) and the secondary display surface (22) are arranged at an angle greater than zero degrees and less than 90 degrees to each other, wherein a bending edge (26) of the display surface (16) formed bent is arranged between the principal display surface (18) and the secondary display surface (22).

2. The display device (14) according to the preceding claim, wherein the display device (14) includes a carrier element as well as multiple controllable lighting elements, which are arranged on the carrier element, wherein the lighting elements arranged on the carrier element form the display surface (16).

3. The display device (14) according to the preceding claim, wherein the multiple lighting elements are formed as respective organic light-emitting diodes and/or micro light-emitting diodes.

4. The display device (14) according to any one of the preceding claims, wherein the principal display surface (18) is formed as a touch-sensitive screen.

5. The display device (14) according to any one of the preceding claims, wherein the principal display surface (18) is formed as a transparent screen.

6. A motor vehicle (10) with a display device (14) according to any one of the preceding claims.

7. The motor vehicle (10) according to the preceding claim, wherein the display device (14) is arranged in a dashboard (12) of the motor vehicle (10).

## Revendications

1. Dispositif d'affichage (14) pour un véhicule à moteur (10), comprenant une surface d'affichage (16) ayant :
- une surface d'affichage principale (18) agencée de manière au moins partiellement visible à partir d'un point d'observation (15) prédéterminé ; et
- une surface d'affichage secondaire (22) agencée de manière invisible à partir du point d'observation (15) ;
la surface d'affichage principale (18) et la surface d'affichage secondaire (22) étant agencées l'une par rapport à l'autre de telle sorte que, lorsqu'elles sont vues à partir du point d'observation (15), la surface d'affichage secondaire (22) se réfléchit dans la surface d'affichage principale (18), **caractérisé en ce qu'**un plan d'affichage virtuel (24) visible à partir du point d'observation (15), sur lequel un contenu d'affichage réfléchi de la surface d'affichage secondaire (22) est affiché, apparaît par conséquent optiquement derrière la surface d'affichage principale (18) et la surface d'affichage (16) est formée d'un seul tenant, la surface d'affichage (16) étant formée pliée et la surface d'affichage principale (18) et la surface d'affichage secondaire (22) étant agencées à un angle supérieur à zéro degré et inférieur à 90 degrés l'une par rapport à l'autre, un bord de pliage (26) de la surface d'affichage formée pliée (16) étant agencé entre la surface d'affichage principale (18) et la surface d'affichage secondaire (22).

2. Dispositif d'affichage (14) selon la revendication précédente, dans lequel le dispositif d'affichage (14) comprend un élément de support ainsi que plusieurs éléments d'éclairage pouvant être commandés, qui sont agencés sur l'élément de support, les éléments d'éclairage agencés sur l'élément de support formant la surface d'affichage (16).

3. Dispositif d'affichage (14) selon la revendication précédente, dans lequel les éléments de la pluralité d'éléments d'éclairage sont réalisés sous forme de diodes électroluminescentes organiques et/ou de microdiodes électroluminescentes respectives.

4. Dispositif d'affichage (14) selon l'une des revendications précédentes, dans lequel la surface d'affichage principale (18) est réalisée sous forme d'écran tactile.

5. Dispositif d'affichage (14) selon l'une des revendications précédentes, dans lequel la surface d'affichage principale (18) est réalisée sous forme d'écran transparent.

6. Véhicule à moteur (10) comportant un dispositif d'affichage (14) selon l'une des revendications précédentes.

7. Véhicule à moteur (10) selon la revendication précédente, dans lequel le dispositif d'affichage (14) est agencé dans un tableau de bord (12) du véhicule à moteur (10).
